# NEUE EUROPÄISCHE PATENTSCHRIFT

(11) **EP 1 376 020 B2**
(45) Veröffentlichungstag und Bekanntmachung des Hinweises auf die Entscheidung über den Einspruch: **17.12.2014**
(45) Hinweis auf die Patenterteilung: 07.10.2009
(21) Anmeldenummer: 02013884.8
(22) Anmeldetag: 24.06.2002
(51) Int. Cl.: F24F 5/00, F24J 3/08

(54) **Verfahren sowie Vorrichtung zur Temperierung von Aussenluft für die Wohnungsbelüftung**
Method and Device for tempering outdoor air used for rooms ventilation
Méthode et dispositif pour tempérer l'air frais servant à la ventilation de locaux

(43) Veröffentlichungstag der Anmeldung: 02.01.2004
(73) Patentinhaber: Zehnder Verkaufs- und Verwaltungs AG, 5722 Gränichen (CH)
(72) Erfinder: Kriesi, Ruedi, Dr., 8820 Wädenswil (CH)
(74) Vertreter: Stenger, Watzke & Ring

(56) Entgegenhaltungen:
- DE-A- 2 843 813
- DE-A- 19 950 212
- DE-A1- 2 843 813
- DE-A1- 19 950 212
- US-A- 4 325 357
- US-A- 4 325 357

## Beschreibung

Die Erfindung betrifft ein Verfahren sowie eine Vorrichtung zur Temperierung von Außenluft für die Wohnungsbelüftung.

Für die Belüftung von Wohnräumen bzw. von Geschäftsräumen oder Bereichen hiervon ist es aus dem Stand der Technik bekannt, Frischluft von außerhalb des Gebäudes anzusaugen und zur Belüftung in die entsprechenden Räume oder Raumbereiche einzuspeisen. Um Zuglufterscheinungen einerseits bzw. Hitzestauen andererseits zu vermeiden, ist es im Stand der Technik vorbekannt, die von außen zugeführte Luft vor einem Einbringen in die Räume oder Raumbereiche vorzutemperieren. Eine solche Vortemperierung ist beispielsweise aus der DE-A-28 43 813 bekannt, die offenbart, dass Zuluft zunächst einem Luft-Luft-Wärmetauscher zugeführt wird, in den auch aus Wohnräumen abgesaugte Abluft eingeführt wird. Die infolge des Hindurchführens durch den Luft-Luft-Wärmetauscher aufgewärmte Zuluft kann dann entweder weiter aufgewärmt oder abgekühlt werden, je nachdem, welche Zulufttemperatur gewünscht ist.

Die Vortemperierung der Frischluft geschieht insbesondere unter dem Aspekt der Kosteneminimierung unter Verwendung von Wärmerückgewinnungseinrichtungen. Bei derlei Wärmerückgewinnungseinrichtungen wird die von außen zugeführte Frischluft in Wärmetauschern an der verbrauchten Abluft vorbei geführt, so daß ein Temperaturaustausch zwischen der von außen eingebrachten kühleren Frischluft und der abzuführenden wärmeren Abluft erfolgt. In vorteilhafterweise wird so den zu belüftenden Räumen eine bereits vortemperierte Frischluft zugeführt.

Von Nachteil bei dem vorbeschriebenen Verfahren ist jedoch der Umstand, daß bei tiefen Außentemperaturen Feuchtigkeit aus der Abluft auskondensiert und im Wärmetauscher sowohl auf den Tauscherflächen als auch im Bereich der Luftkanäle gefriert. Um ein Zufrieren und letztendlich eine Beschädigung des Wärmetauschers zu verhindern, ist die Zufuhr von Frischluft von Zeit zu Zeit zu unterbrechen, so daß das auf den Tauscherflächen und im Bereich der Abluftkanäle ausgebildete Eis unter Einwirkung des Abluftstroms der aufgewärmten Abluft wieder abtaut. Während eines solchen Abtauvorgangs ist die benötigte Frischluft direkt in die jeweiligen Räume bzw. Raumbereiche einzuleiten. Dies kann in nachteiliger Weise zu Zugluft führen, die insbesondere bei tiefen Außentemperaturen als sehr unangenehm empfunden wird.

Um die Komforteinbuße durch kalte Zugluft zu vermeiden, ist es aus dem Stand der Technik bekannt, die Außenluft entweder elektrisch oder mittels Erderwärmung in einem Erdregister vorzuwärmen. Das elektrische Aufheizen der Außenluft widerspricht dabei den Anforderungen an einen möglichst niedrigen Energieverbrauch und ist insbesondere bei einer Frischluftzufuhr für mehrere Räume bzw. mehrere Raumbereiche ungeeignet. Die Erwärmung mittels Erdregister vermeidet hingegen zuverlässig ein Einfrieren des sich ausbildenden Kondenswassers und erlaubt zudem ohne die Zufuhr von Fremdenergie auch eine leichte Vorkühlung der Außenluft während der Sommermonate.

Die aus dem Stand der Technik vorbekannten Erdregister bestehen aus in die Erde eingegrabenen Rohren, die von der angesogenen Außenluft durchströmt werden. Zumeist werden diese Rohre durch die Kellerwand in das Haus eingeführt, von wo aus sie dann verzweigen und an eine jeweils in einem Raum vorgesehene Belüftungseinrichtung angeschlossen sind. Die Funktionsweise des vorbeschriebenen Erdregisters ist dabei die folgende: von Außen angesogene Frischluft wird durch die Rohre des Erdregisters geführt und dabei angewärmt. Bei tiefen Außentemperaturen kann somit mittels des Erdregisters sichergestellt werden, das die dem Haus zugeführte Frischluft zumindest soweit angewärmt ist, daß es in den Zuluft-Abluft-Wärmetauschern nicht zu einer Einfrierung der aus der Abluft auskondensierten Feuchtigkeit kommt. Durch das Erdregister vorgewärmt und im Abluft-Zuluft-Wärmetauschem weiter aufgewärmt wird die Frischluft sodann über Lüftungseinrichtungen in die jeweiligen Räume oder Raumbereiche eingebracht.

Das vorbeschriebene Vorwärmen mittels Erdwärme weist zwar gegenüber dem elektrischen Vorheizverfahren erhebliche Vorteile auf, doch ist der Wirkungsgrad dieses Systems gering, so daß sich die Investitionen für den Bau eines Erdregisters nur bei einer größeren Wohn- oder Gewerbefläche lohnen. Zudem ist von Nachteil, daß es für die Durchführung des vorbeschriebenen Verfahrens eines vom Untergeschoß bis ins obere Stockwerk reichenden Schachtes für den Transport der Außenluft bedarf, so daß es insbesondere im Rahmen der Nachrüstung zu zum Teil erheblichen Umbaumaßnahmen kommen kann.

**Aufgabe** der Erfindung ist es daher, ein Verfahren zur Temperierung von Außenluft für die Wohnungsbelüftung bereitzustellen, das unter Vermeidung der vorgenannten Nachteile einen hohen Wirkungsgrad aufweist und eine zuverlässige sowie auch bei unterschiedlichen Außentemperaturen im wesentlichen gleichbleibende Vortemperierung der Außenluft ermöglicht. Zudem soll mit der Erfindung eine Vorrichtung zur Durchführung des Verfahrens vorgeschlagen werden.

Zur **Lösung** hinsichtlich des Verfahrens wird mit Erfindung vorgeschlagen ein Verfahren nach Anspruch 1.

Im Unterschied zum Stand der Technik nutzt das erfindungsgemäße Verfahren einen separaten, geschlossenen Strömungskreislauf, in welchem ein Trägermedium geführt wird. Als besonders vorteilhaft hat sich hierbei Sole, das heißt mit Salz versetztes Wasser als Trägermedium herausgestellt. Dieses wird über ein entsprechendes Rohrsystem einem im Erdboden angeordneten Erdregister zugeführt und dabei mittels Erdwärme temperiert. Je nach Ausgangstemperatur des Trägermediums kann hierbei im Erdregister entweder ein Erwärmen oder ein Abkühlen des Trägermediums erfolgen. Das temperierte Trägermedium wird sodann im Haus installierten Wärmetauschern zugeführt. Die Wärmetauscher werden zugleich von Frischluft durchströmt, so daß es zu einem Temperaturaustausch zwischen dem im geschlossenen Strömungskreislauf geführten Trägermedium einerseits und der den Wärmetauschern zugeführten Frischluft andererseits kommen kann. Die in den Wärmetauschern vortemperierte Frischluft wird sodann den einzelnen Räumen oder Bereichen des Hauses zugeführt, wobei die mittels der Trägermedium-Frischluft-Wärmetauscher vortemperierte Frischluft zuvor jeweils einem weiteren Wärmetauscher für eine Wärmeübertragung zwischen der Frischluft und der aus den jeweiligen Räumen abzuführenden Abluft zugeführt wird.

Entscheidender Vorteil des erfindungsgemäßen Verfahrens liegt in dem verbesserten Wirkungsgrad gegenüber den aus dem Stand der Technik bekannten Verfahren. Erreicht wird dies durch die Trennung der Strömungskreislaufe für die Frischluftzufuhr auf der einen Seite und der Strömungskreislaufe für das mittels Erdwärme zu erwärmende Trägermedium auf der anderen Seite. Gekoppelt sind diese Strömungskreisläufe über gemeinsame Wärmetauscher, wobei in den Wärmetauschern sowohl eine Erwärmung als auch eine Abkühlung der zugeführten Frischluft erfolgen kann. Für den Fall nämlich, daß die von außen zugeführte Frischluft eine niedrigere Temperatur aufweist, was beispielsweise im Winter der Fall ist, so erfolgt in den Wärmetauschern eine Erwärmung der zugeführten Frischluft. Sollte hingegen beispielsweise in den Sommermonaten die von außen zugeführte Frischluft eine höhere Temperatur aufweisen, erfolgt in den Wärmetauschern eine Abkühlung der zugeführten Frischluft. Das erfindungsgemäße Verfahren sichert somit in zuverlässiger Weise eine auch zu unterschiedlichen Jahreszeiten im wesentlichen gleichbleibende Temperierung der zugeführten Frischluft.

Bezüglich der Vorrichtung wird zur **Lösung** der vorgenannten Aufgabe mit der Erfindung eine Vorrichtung bereitgestellt, mit den Merkmalen nach Anspruch 4.

Durch die Separierung der Strömungskreisläufe wird der schon hinsichtlich des Verfahrens erläuterte hohe Wirkungsgrad der Einrichtung begründet. Die ersten Wärmetauscher werden dabei durch das mittels Erdwärme temperierten Trägermedium einerseits und dem zu temperierenden Frischluftzustrom andererseits durchströmt. Die auf diese Weise vortemperierte Frischluftströme werden sodann jeweils einem Abluft- Zuluft- Wärmetauscher zugeführt, so daß mittels reiner Wärmerückgewinnung die den zu belüftenden Räumen zugeführte Frischluft auf die gewünschte Temperatur angehoben werden kann. Die Vortemperierung der zugeführten Frischluft mittels der Trägermedium-Frischluft-Wärmetauscher nach der erfindungsgemäßen Vorrichtung sorgt mithin in vorteilhafterweise dafür, daß allein durch einen Wärmeausstausch zwischen Ab- und Zuluft den in den jeweiligen Räumen installierten Lüftungseinrichtungen Frischluft mit einer an die Raumtemperatur angepaßten Temperatur zugeführt werden kann, ohne das dabei die Gefahr von Einfrierungen der Wärmetauscher und der Lüftungseinrichtung besteht. Im umgekehrten Fall, wenn also die von außen zugeführte Frischluft bereits durch entsprechende Sonneneinstrahlung aufgeheizt ist, sorgt die erfindungsgemäße Vorrichtung dafür, daß die den Abluft- Zuluft- Wärmetauschern zugeführte Frischluft derart stark abgekühlt ist, daß auch in diesem Fall eine gewünschte, an die Raumtemperatur angepaßte Frischlufttemperatur erreicht wird.

Insgesamt wird somit mittels der erfindungsgemäßen Vorrichtung sichergestellt, daß sowohl bei tiefen als auch bei hohen Temperaturen der Frischluft eine Erwärmung bzw. Abkühlung in einem solchen Maße erfolgt, daß die anschließend jeweils einem Abluft- Zuluft- Wärmetauscher zugeführte Frischluft eine solche Temperatur aufweist, daß allein die im Abluft-Zuluft-Wärmetauscher übertragene Wärmemenge ausreichend ist, um die Frischluftzufuhr auf die gewünschte Raumtemperatur zu bringen.

Gemäß einem weiteren Merkmal der Erfindung ist vorgesehen, daß das Strömungsmedium eine Flüssigkeit, vorzugsweise Sole ist. Die Verwendung von Sole hat hierbei den besonderen Vorteil, daß besondere Sicherungsvorrichtungen, was die Ausrüstung des Strömungskreislaufes angeht, nicht getroffen werden müssen. Auch ist eine Wartung eines mit Sole befüllten Strömungskreislaufes auf einfache Weise und wenig kostenintensiv durchzuführen. Die Verwendung von Sole anstelle von Wasser bietet dabei den Vorteil, daß ein Einfrieren des Strömungskreislaufes auch bei niedrigen Temperaturen unterbunden ist.

Gemäß einer alternativen Ausgestaltungsform ist als Trägermedium Grundwasser vorgesehen. Dieses wird mittels entsprechender Pumpen aus den Grundwasserbereichen hochgefördert, durchläuft die Trägermedium-Frischluft-Wärmetauscher und wird wieder zurückgeführt. Auf diese Weise wird mittels natürlicher Ressourcen ein Trägermedium-Strömungskreislauf bereitgestellt, der eine hinreichende Vortemperierung sicherstellt und zudem einfach zu installieren ist.

Gemäß der Erfindung ist vorgesehen, daß der das Trägermedium führende Strömungskreislauf mittels einer Vielzahl von Wärmetauscher mit einer Vielzahl von Frischluft-Strömungskreisläufen wärmeübertragend in Verbindung steht. Dabei ist nicht ein zentraler Trägermedium-Frischluft-Wärmetauscher vorgesehen, statt dessen verfügt jede Luftzuführungseinrichtung eines jeden Raumes über einen separaten Wärmeaustauscher. All diese Wärmeaustauscher bilden einen eigenständigen Frischluft-Strömungskreislauf aus, sind jedoch an ein und denselben Trägermedium-Strömungskreislauf angeschlossen. Diese Vorrichtung erlaubt eine raumunabhängige Temperatureinstellung, wobei die in den jeweiligen Räumen vorgesehenen Trägermedium-Frischluft-Wärmetauscher und jeweils die nachgeschalteten Abluft-Zuluft-Wärmetauscher eine jeweils in Abhängigkeit der gewünschten Raumtemperatur unterschiedliche Wärmemenge übertragen. Diese dezentrale Anordnung einer Vielzahl von Trägermedium-Frischluft-Wärmetauschern bietet sich insbesondere dann an, wenn die zu temperierenden Räume entweder vorwiegend geschlossen gehalten werden und ein Austausch mit der Raumluft benachbarter Räume nicht stattfindet.

Gemäß einem weiteren Merkmal der Erfindung ist vorgesehen, daß für die Temperierung des Trägermediums ein zentraler Erdkollektor, eine Erdsonde und/oder ein Grundwasserbrunnen vorgesehen ist. Erdkollektor bzw. Erdsonde können bevorzugterweise in die Baugrube eingebracht werden bzw. im Falle der Nachrüstung auch im Bereich des übrigen Grundstückes, beispielsweise im Garten oder unterhalb von Parkflächen untergebracht werden.

Weitere Vorteile und Merkmale der Erfindung ergeben sich aus der Beschreibung anhand der nachfolgenden Figuren. Dabei zeigen:
Fig. 1: In einer schematischen Darstellung ein nicht erfindungsgemäße Verfahren;
Fig. 2 in einer schematischen Darstellung das erfindungsgemäße Verfahren,
Fig. 3 in einer schematischen Darstellung die Verwendung der Vorrichtung nach Fig. 1 in einem Einfamilienhaus mit Wärmepumpe und
Fig. 4 in einer schematischen Darstellung die Verwendung der erfindungsgemäßen Vorrichtungen in einem Mehrfamilienhaus mit konventioneller Heizung.

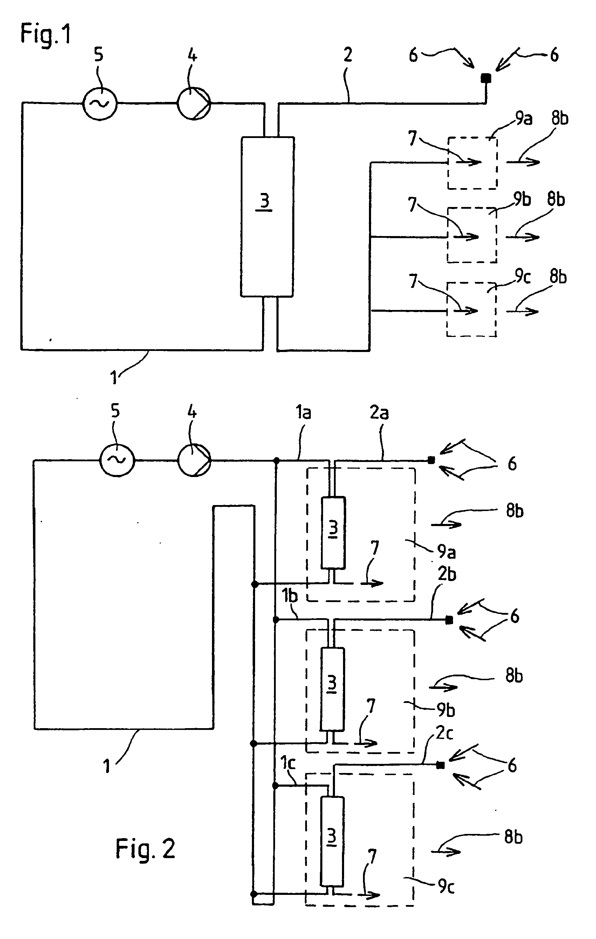

Fig. 1 zeigt einen Strömungskreislauf 1 für das Trägermedium. Dieser Strömungskreislauf 1 ist geschlossen und das Trägermedium wird mittels einer Pumpe 4 stetig umgepumpt. Um eventuelle Ausdehnungen des Trägermediums im Falle einer starken Erwärmung oder Abkühlung abfangen zu können weist der Strömungskreislauf 1 ein Ausgleichsvolumen 5 auf.

Dargestellt ist in Fig. 1 des weiteren ein zweiter Strömungskreislauf 2 für die den Räumen 9a, 9b und 9c zu zuführende Frischluft 6. Diese wird von außen über den Strömungskreislauf 2 angesogen und als Zuluft 7 den jeweiligen Räumen 9a bis 9c zugeführt. Der Strömungskreislauf 1 für das Trägermedium und der Strömungskreislauf 2 für die Frischluft sind mittels eines gemeinsamen Trägermedium-Frischluft-Wärmetauschers 3 miteinander verbunden. Das Trägermedium wird im geschlossenen Strömungskreislauf 1 geführt und mittels Erdwärme erwärmt. Dienen können hierzu ein in der Figur nicht dargestellter Erdkollektor, eine Erdsonde oder ein Grundwasserbrunnen. Die im offenen Strömungskreislauf 2 geführte Frischluft 6 wird im gemeinsamen Trägermedium-Frischluft-Wärmetauscher 3 vortemperiert und kann sodann entweder bei hinreichender Temperierung direkt in die Räume 9a bis 9c eingespeist werden oder mittels eines weiteren Wärmetauschers unter Verwendung der verbrauchten Abluft 8b auf die gewünschte Raumtemperatur vortemperiert werden.

Der besondere Vorteil dieses Verfahrens liegt in dem Umstand begründet, daß auch bei sehr tiefen Außentemperaturen der Frischluft, die beispielsweise nahe dem Gefrierpunkt liegen können, allein durch einen Wärmeaustausch zwischen der Abluft 8b und der Zuluft 7 eine gewünschte Temperatur in der Zuluft 7 eingestellt werden kann, ohne das die Gefahr des Einfrierens von aus der Abluft stammenden Kondenswasser besteht. Der gemeinsame Trägermedium-Frischluft-Wärmetauscher 3 dient mithin der Vortemperierung der Frischluft 6, so daß diese ohne weitere Funktionseinschränkungen mittels der Abluft 8b aufgewärmt werden kann.

Mit diesem Verfahren ist es zudem gleichfalls möglich, die zugeführte Frischluft 6 nicht nur aufzuheizen, sondern auch abzukühlen. Diese bietet sich insbesondere dann an, wenn während der heißen Sommermonate die zugeführte Frischluft 6 aufgrund der herrschenden Sonneneinstrahlung bereits eine solch hohe Temperatur erreicht, daß ein direktes Einführen in die Räume 9a bis 9c nicht gewünscht ist. In diesem Fall erfolgt im Trägermedium- Frischluft-Wärmetauscher eine Abkühlung der Frischluft 6 auf eine vorher einstellbare Temperatur.

Fig. 2 zeigt eine erfindungsgemäße Verfahrensdurchführung, die dem Grunde nach derjenigen nach Fig. 1 entspricht. Im Unterschied zu Fig. 1 ist jedoch bei dem Beispiel nach Fig. 2 nicht ein zentraler Trägermedium-Frischluft-Wärmetauscher vorgesehen, statt dessen verfügt jeder Raum 9a bis 9c über einen jeweiligen Wärmetauscher 3, so daß die Räume 9a bis 9c jeweils unabhängig voneinander temperiert werden können. Wie Fig. 2 deutlich zu entnehmen ist, sind ausgehend vom geschlossenden Strömungskreislauf 1 Anschlußkreisläufe 1a, 1b und 1c vorgesehen, die die jeweiligen Trägermedium- Frischluft- Wärmetauscher 3 an den Strömungskreislauf 1 ankoppeln. Jeder Raum 9a bis 9c verfügt darüber hinaus über einen eigenen Strömungskreislauf 2a, 2b und 2c für die Zuführung von Frischluft 6. Im übrigen entspricht das Funktionsprinzip demjenigen, wie es zu Fig. 1 erläutert wurde.

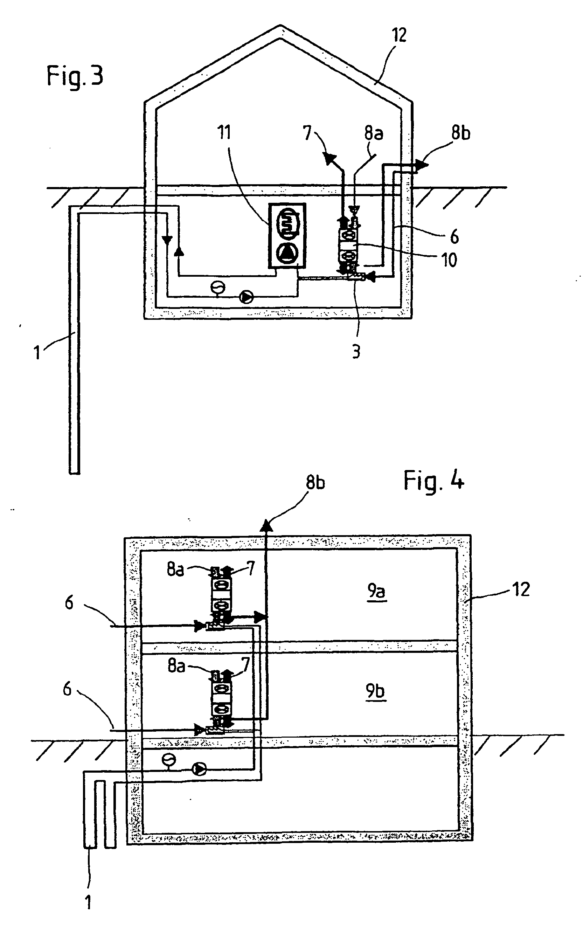

Fig. 3 zeigt beispielhaft die Verwendung der Vorrichtung nach Fig. 1 in einem Einfamilienhaus, das mit einer Wärmepumpe beheizt wird. Dargestellt ist ein Strömungskreislauf 1, in welchem die Wärmepumpe 11 integriert ist. Angeschlossen an den Strömungskreislauf 1 ist des weiteren der Trägermedium-Frischluft-Wärmetauscher 3. Dieser befindet sich in unmittelbarer Nähe des Lüftungsgeräts 10 mit welchem die Verteilung von Frischluft, Zuluft und Abluft zentral gesteuert wird.

Die Frischluft 6 wird von außerhalb des Gebäudes angesogen und mittels des Wärmetauschers 3 vortemperiert. Diese vortemperierte Frischluft wird in einem in der Figur nicht dargestellten Wärmetauscher unter Verwendung der Abluft 8a auf die gewünschte Raumtemperatur vortemperiert. Diese vortemperierte Frischluft 6 wird sodann als Zuluft 7 über das Luftverteilungsgerät 10 in den Wohnraum abgegeben. Die als Abluft 8a angesaugte verbrauchte Luft wird, nachdem sie den Wärmetauscher zur Aufheizung der zugeführten Frischluft verlassen hat als Abluft 8b an die das Haus 12 umgebende Atmosphäre abgegeben.

Das mit der Fig. 3 beschriebene System verfügt über einen zentralen Trägermedium-Frischluft-Wärmetauscher 3 sowie über ein zentral angeordnetes Lüftungsgerät 10. Alternativ hierzu kann auch eine erfindungsgemäße dezentrale Anordnung vorgesehen sein, was am Beispiel eines Mehrfamilienhauses mit konventioneller Heizung Fig. 4 entnommen werden kann.

Gezeigt ist mit Fig. 4 gleichfalls ein geschlossener Strömungskreislauf 1 für das Trägermedium. Im Unterschied zu der Ausgestaltung nach Fig. 3 ist jedoch für jeden einzelnen Raum 9a und 9b ein separater Trägermedium-Frischluft- Wärmetauscher 3 sowie ein separates Lüftungsgerät 10 vorgesehen. Mit Vorteil kann somit jede Etage bzw. jeder Raum 9a, 9b unabhängig von der jeweils anderen Etage bzw. den anderen Räumen 9a, 9b temperiert werden. Im übrigen entspricht die Funktionsweise der Ausführungsform nach Fig. 4 derjenigen nach Fig. 3.

Das vorgeschriebene Beispiel dient lediglich der näheren Erläuterung der Erfindung und wirkt in keiner Weise beschränkend.

### Bezugszeichenliste

- 1: Strömungskreislauf
- 1a, 1b, 1c: Anschlußkreislauf
- 2a, 2b, 2c: Strömungskreislauf
- 3: Wärmetauscher
- 4: Pumpe
- 5: Ausgleichsvolumen
- 6: Frischluft
- 7: Zuluft
- 8a, 8b: Abluft
- 9a, 9b, 9c: Raum
- 10: Lüftungsgerät
- 11: Wärmepumpe
- 12: Haus

## Patentansprüche

1. Verfahren zur Temperierung von Außenluft für die Wohnungsbelüftung, bei dem in einem geschlossenen Strömungskreislauf (1) ein Trägermedium geführt und mittels Erdwärme temperiert wird, von außen angesogene Frischluft (6) in Trägermedium-Frischluft-Wärmetauschern (3) vortemperiert und als Zuluft (7) Abluft-Zuluft-Wärmetauschern zugeführt und auf die gewünschte Temperatur angehoben und anschließen in Räume (9a, 9b, 9c) eingebracht wird, wobei jeder Raum (9a, 9b, 9c) über einen jeweiligen Trägermedium-Frischluft-Wärmetauscher (3) und über einen eigenen Stromungskreislauf (2a, 2b, 2c) für die Zuführung von Frischluft (6) verfügt, so dass die Räume (9a, 9b, - 9c) jeweils unabhängig voneinander temperiert werden können, wobei die in den jeweiligen Räumen (9a, 9b, 9c) vorgesehenen Trägermedium-Frischluft-Wärmetauscher (3) und der jeweils nachgeschaltete Abluft-Zuluft-Wärmetauscher eine jeweils in Abhängigkeit der gewünschten Raumtemperatur unterschiedliche Wärmemenge übertragen.

2. Verfahren nach Anspruch 1, **dadurch gekennzeichnet, dass** die von außen angesogene Luft (6) im Trägermedium-Frischluft-Wärmetauscher (3) vorgewärmt wird.

3. Verfahren nach Anspruch 1, **dadurch gekennzeichnet, dass** die von außen angesogene Luft (6) im Trägermedium-Frischluft-Wärmetauscher (3) gekühlt wird.

4. Vorrichtung zur Temperierung von Außenluft für die Wohriungsbelüftung, mit wenigstens zwei voneinander unabhängigen Strömungskreisläufen (1, 2), die mittels Trägermedium-Frischluft-Wärmetauschern (3) wärmeübertragend in Verbindung stehen, wobei der eine Strömungskreislauf (1) geschlossen ausgebildet ist und ein mittels Erdwärme temperierbares Trägermedium führt, wobei den Trägermedium-Frischlüft-Wärmetauschern (3) in Strömungsrichtung der Frischluft (6) jeweils ein Abluft-Zuluft-Wärmetauscher nachgeschaltet ist, wobei der das Trägermedium führende geschlossene Strömungskreislauf (1) mittels einer Vielzahl von Trägermedium-Frischluft-Wärmtauschern (3) mit einer Vielzahl von Frischluft-Strömungskreisläufen (2a, 2b, 2c) wärmeübertragend in Verbindung steht, wobei ausgehend vom geschlossenen Strömungskreislauf (1) Anschlusskreisläufe (1a, 1b, 1c) vorgesehen sind, die die jeweiligen Trägermedium-Frischluft-Wärmetauscher (3) an den geschlossenen Strömungskreislauf (1) ankoppeln.

5. Vorrichtung nach Anspruch 4, **dadurch gekennzeichnet, dass** für eine Temperierung des Trägermediums ein zentraler Erdkollektor, eine Erdsonde und/oder ein Grundwasserbrunnen vorgesehen ist.

6. Vorrichtung nach einem der Ansprüche 4, oder 5, **dadurch gekennzeichnet, dass** das Trägermedium eine Flüssigkeit, vorzugsweise Sole ist.

7. Vorrichtung nach einem der Ansprüche 4, oder 5, **dadurch gekennzeichnet, dass** das Trägermedium Grundwaser ist.

8. Vorrichtung nach einem der Ansprüche 4 bis 7, **dadurch gekennzeichnet, dass** der andere Strömungskreislauf (2) offen außen ausgebildet ist und der Zuführung von Frischluft (6) dient.

9. Vorrichtung nach einem der Ansprüche 4 bis 8, **dadurch gekennzeichnet, dass** der Trägermedium-Frischluft-Wärmetauscher (3) ein Flüssigkeit-Luft-Wärmetauscher ist.

## Claims

1. A method of tempering outside air for the ventilation of a residence, in which a carrier medium is conducted in a closed circuit (1) and is tempered by means of geothermal heat, fresh air (6) drawn in from the outside is pre-tempered in carrier medium-fresh air heat exchangers (3) and is supplied as supply air (7) to exhaust air-supply air heat exchangers and raised to the desired temperature and is then introduced into rooms (9a, 9b, 9c), wherein each room (9a, 9b, 9c) comprises a respective carrier medium-fresh air heat exchanger (3) and an individual flow circuit (2a, 2b, 2c) for supplying fresh air (6), such that the rooms (9a, 9b, 9c) can be each tempered independently from each other, wherein the carrier medium-fresh air heat exchangers (3) provided in the respective rooms (9a, 9b, 9c) and the downstream exhaust air-supply air heat exchanger transmit respectively different heat quantities in dependence upon the desired room temperature.

2. A method according to claim 1, **characterized in that** the air (6) drawn in from the outside is preheated in the carrier medium-fresh air heat exchanger (3).

3. A method according to claim 1, **characterized in that** the air (6) drawn in from the outside is cooled in the carrier medium-fresh air heat exchanger (3).

4. A device for tempering outside air for the ventilation of a residence, comprising at least two flow circuits (1, 2) which are independent from each other and are in heat transfer communication by means of carrier medium-fresh air heat exchangers (3), wherein the one flow circuit (1) is closed and conducts a carrier medium which may be tempered by means of geothermal heat, wherein connected downstream of the carrier medium-fresh air heat exchangers (3) in the direction of flow of the fresh air (6) there is respectively an exhaust air-supply air heat exchanger, wherein the closed flow circuit (1) conducting the carrier medium is in heat transfer communication with a plurality of fresh air-flow circuits (2a, 2b, 2c) by means of a plurality of carrier medium-fresh air heat exchangers (3), wherein starting from the closed flow circuit (1) there are provided connection circuits (1 a, 1 b, 1 c) which couple the respective carrier medium-fresh air heat exchangers (3) to the closed flow circuit (1).

5. A device according to claim 4, **characterized in that** a central earth collector, an earth probe and/or a ground water well is provided for tempering the carrier medium.

6. A device according to one of the claims 4 or 5, **characterized in that** the carrier medium is a liquid, preferably brine.

7. A device according to one of the claims 4 or 5, **characterized in that** the carrier medium is ground water.

8. A device according to one of the claims 4 through 7, **characterized in that** the other flow circuit (2) is open towards outside and serves to supply fresh air (6).

9. A device according to one of the claims 4 through 8, **characterized in that** the carrier medium-frsh air heat exchanger (3) is a liquid-air heat exchanger.

## Revendications

1. Procédé pour tempérer l'air extérieur pour la ventilation d'un logement, dans lequel un fluide caloporteur est circulé dans un circuit de circulation (1) fermé et est tempéré par géothermie, de l'air frais (6) aspiré de l'extérieur est pré-tempéré dans des échangeurs thermiques à air frais et fluide caloporteur (3) et est amené comme air entrant (7) à des échangeurs thermiques à air sortant et air entrant et chauffé à une température désirée et ensuite introduit dans des pièces (9a, 9b, 9c), chaque pièce (9a, 9b, 9c) étant munie d'un échangeur thermique à air frais et fluide caloporteur (3) respectif et d'un propre circuit de circulation (2a, 2b, 2c) destiné à amener de l'air frais (6) de sorte que les pièces (9a, 9b, 9c) peuvent chacune être tempérées de manière indépendante l'une de l'autre, les échangeurs thermiques à air frais et fluide caloporteur (3) prévus dans les pièces respectives (9a, 9b, 9c) et l'échangeur thermique à air entrant et air sortant respectif en aval transmettant une quantité de chaleur différente respectivement en fonction de la température de la pièce désirée.

2. Procédé selon la revendication 1, **caractérisé en ce que** l'air (6) aspiré de l'extérieur est préchauffé dans l'échangeur thermique à air frais et fluide caloporteur (3).

3. Procédé selon la revendication 1, **caractérisé en ce que** l'air (6) aspiré de l'extérieur est refroidi dans l'échangeur thermique à air frais et fluide caloporteur (3).

4. Dispositif destiné à tempérer de l'air extérieur pour l'aération d'un logement, comprenant au moins deux circuits de circulation (1, 2) indépendants l'un de l'autre, qui sont en liaison de transfert thermique par moyen des échangeurs thermiques à air frais et fluide caloporteur (3), l'un circuit de circulation (1) étant fermé et acheminant un fluide caloporteur pouvant être tempéré par géothermie, un échangeur thermique à air entrant et air sortant étant respectivement monté en aval des échangeurs thermiques à air frais et fluide caloporteur (3) dans le sens de circulation de l'air frais (6), le circuit de circulation (1) fermé et acheminant le fluide caloporteur étant en liaison de transfert thermique avec une pluralité de circuits de circulation à air frais (2a, 2b, 2c) par moyen d'une pluralité d'échangeurs thermiques à air frais et fluide caloporteur (3), des circuits de connexion (1a, 1 b, 1 c) étant prévus à partir du circuit de circulation fermé (1), lesquels couplent les échangeurs thermiques à air frais et fluide caloporteur respectifs (3) avec le circuit de circulation fermé (1).

5. Dispositif selon la revendication 4, **caractérisé en ce qu'**un collecteur géothermique central, une sonde géothermique et/ou un puits dans la nappe phréatique est prévu pour tempérer le fluide caloporteur.

6. Dispositif selon l'une des revendications 4 ou 5, **caractérisé en ce que** le fluide caloporteur est un liquide, de préférence de l'eau salée.

7. Dispositif selon l'une des revendications 4 ou 5, **caractérisé en ce que** le fluide caloporteur est de l'eau souterraine.

8. Dispositif selon l'une des revendications 4 à 7, **caractérisé en ce que** l'autre circuit de circulation (2) est ouvert vers l'extérieur et sert à amener de l'air frais (6).

9. Dispositif selon l'une des revendications 4 à 8, **caractérisé en ce que** l'échangeur thermique à air frais et fluide caloporteur (3) est un échangeur thermique liquide-air.
